(19) Europäisches Patentamt
European Patent Office
Office européen des brevets

(11) Numéro de publication: **0 070 786**
**B1**

(12) # FASCICULE DE BREVET EUROPEEN

(45) Date de publication du fascicule du brevet: **28.01.87**

(51) Int. Cl.[4]: **C 08 G 77/08**, C 08 L 83/04, C 08 G 77/18

(21) Numéro de dépôt: **82420081.0**

(22) Date de dépôt: **22.06.82**

(54) **Procédé d'obtention de compositions organosiliciques vulcanisables à l'humidité, par condensation de composés organosiliciques à groupements hydroxylsilylés, d'agent réticulant à groupements polyalkoxysilylés et d'hydroxylamine substitués - compositions ainsi obtenues et leurs utilisations pour l'obtention de matériaux durcis.**

(30) Priorité: **26.06.81 FR 8112780**

(43) Date de publication de la demande:
**26.01.83 Bulletin 83/04**

(45) Mention de la délivrance du brevet:
**28.01.87 Bulletin 87/05**

(84) Etats contractants désignés:
**BE DE GB NL**

(56) Documents cités:
**FR-A-1 302 035**
**FR-A-1 459 792**
**FR-A-1 495 011**
**GB-A- 874 559**
**US-A-3 296 198**
**US-A-3 770 847**

**Le dossier contient des informations techniques présentées postérieurement au dépôt de la demande et ne figurant pas dans le présent fascicule.**

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Letoffe, Michel**
**5, avenue de Limburg**
**F-69110 Sainte-Foy-lès-Lyon (FR)**

(74) Mandataire: **Chichery, Guy et al**
**RHONE-POULENC INTERSERVICES Service Brevets Chimie Centre de Recherches de Saint-Fons B.P. 62**
**F-69192 Saint-Fons Cédex (FR)**

**EP 0 070 786 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un procéde d'obtention de compositions organosiliciques monocomposant transformables en matériaux durcis par exposition à l'humidité. Les compositions sont préparées par condensation entre un composé organosilicique à groupements hydroxysilylés et un agent réticulant à groupements alkoxysilylés. L'invention concerne également les compositions organosiliciques en résultant ainsi que l'utilisation des ces dernières pour l'obtention de matériaux durcis.

On connait des procédés d'obtention de compositions organopolysiloxaniques dites neutres et qui durcissent en élastomères après exposition à l'humidité. Ces compositions dites "mono-composant" sont en général obtenues à partir de polysiloxanes à groupements hydroxysilylés, et d'un agent réticulant en général choisi parmi les trialkoxysilanes, les silicates ou les polysilicates. La condensation entre le polysiloxane à groupements hydroxysilylés et l'agent réticulant peut être faite en l'absence, ou en présence de catalyseur. En l'absence de catalyseur, la réaction est lente et doit être réalisée à température élevée. C'est pourquoi les compositions contiennent, de manière générale, au moins un catalyseur. Comme ce catalyseur est habituellement introduit avec les divers composés mis en oeuvre pour préparer la composition, celui-ci joue un double rôle. Il est en premier lieu un "activateur" de la réaction de condensation entre le polysiloxane à groupements hydroxysilylés et l'agent réticulant à groupements alkoxysilylés. Dans un deuxième temps, alors que la composition est exposée à l'humidité, le catalyseur élève la vitesse d'hydrolyse des fonctions alkoxysilylées et joue le rôle d'activateur de la vitesse de prise.

On sait ainsi que l'on peut utiliser en tant que catalyseur de condensation une amine. Mais ces catalyseurs qui sont, en outre, d'autant plus efficaces qu'ils sont fortement basiques, demeurent cependant des catalyseurs lents.

Les sels d'organoétains sont des catalyseurs extrêment efficaces. Mais ceux-ci conduisent à des reticulations trop accentuées et irréversibles même lorsqu'on opère en présence d'un gros excès d'agent réticulant. Par ailleurs, de tels systèmes entraînent des réactions de dégradation qui se manifestent au niveau de la composition durant le stockage et également sur l'élastomère obtenu après vulcanisation de la composition.

C'est pourquoi on a tenté d'associer aux catalyseurs aminés une faible quantité de sel d'organoétain. Mais ce système catalytique provoque également, durant le stockage de la composition, des réactions de dégradation et de réticulation. Par ailleurs, ce système catalytique est la cause de l'existence de réactions de dégradation au niveau du matériau durci.

Enfin, on a préconisé l'utilisation à titre de catalyseurs de dérivés du titane tels que les titanates d'alkyle, les carboxylates et les chelates (FR—A—1,266,528 et 1,330,625). Ce sont en règle générale des catalyseurs satisfaisants, mais qui provoquent cependant à la longue la formation de produits de dégradation, tant lors du stockage des compositions, qu'au niveau du matériau durci.

Il est également à souligner que les compositions précédentes subissent, généralement, un épaississement important pendant le mélange des divers ingrédients (polysiloxanes, agent réticulant), cet épaississement étant suivi d'une baisse de viscosité, mais seulement après une période de stockage prolongée. Ce phénomène dit de "structuration" constitue, bien sûr, un inconvénient de ces compositions mono-composants. Cet inconvénient, que l'on retrouve avec les catalyseurs aminés ou les dérivés d'organoétain ou de titane, peut-être limité par le choix de catalyseurs particuliers tels que certains titanates ou certains chélates de titane porteurs de groupements alkoxy dérivés de monoalcools ou de diols (cf par exemple FR—A—1,359,396, 2,121,289, et 2,121,631).

Selon une autre variante, on a revendiqué des compositions monocomposants, stables au stockage et obtenues en mélangeant une huile polysiloxanique préalablement préparée et terminée par des groupements trialkoxysiloxylé et/ou par des groupements organodialkoxysiloxylé avec un réticulant polyalkoxylé et un ester titanique (brevet américain 4,111,890).

Il se posait donc le problème de mettre au point un procédé d'obtention de compositions organosiliciques monocomposants, stables au stockage et mettant directement en oeuvre un composé organosilicique à groupements hydroxysilylés, un agent réticulant à groupement alkoxysilylé et un catalyseur actif assurant rapidement la condensation du composé organosilicique à groupement hydroxysilylé avec l'agent réticulant, et ne provoquant pratiquement pas de réaction de dégradation ou de réticulation. L'invention qui va être exposée maintenant répond précisement à ce but.

Il a été maintenant trouvé, et c'est ce qui constitue l'objet de la présente invention, un procédé d'obtention de compositions organosiliciques transformables en matériaux durcis par exposition à l'humidité et en présence d'hydroxylamine substituée, utilisée en temps que catalyseur, caractérisé en ce que, en vue d'obtenir des compositions mono-composantes stables au stockage, on fait réagir:

1) au moins un alpha, oméga-dihydroxypolysiloxane,

2) au moins un agent réticulant monomère à groupements polyalkoxysilylés choisi parmi le groupe consistant en:

a) les polyalkoxysilanes de formules:

$$R_xSi(OR')_{4-x} \qquad (II)$$

$$R_xSi[(OCH_2—CH_2)_aOR']_{4-x} \qquad (III)$$

dans lesquelles les radicaux R identiques ou différents représentent des radicaux hydrocarbonés non hydrolysables, X représente un nombre entier égal à 1 ou 2, a représente 0 ou 1 et R′ représente un radical alkyle ayant de 1 à 4 atomes de carbone,

b) les silicates de formule:

$$Si(OR')_4 \qquad (III')$$

dans laquelle R′ a la même signification que ci-dessus,

3) de 0,1 à 2% en poids par rapport au poids total de la composition d'hydroxylamine substituée comme catalyseur de réticulation, ledit réticulant (2) étant en quantité telle qu'il y ait, par groupement silanol de 1 à 5 groupements polyalkoxylés,

4) un accélérateur de prise choisi parmi les dérivés de l'étain et/ou les dérivés du titane.

Le procédé, selon l'invention, permet d'obtenir des compositions organosiliciques, et en particulier, diorganopolysiloxaniques fluides, stables au stockage et conduisant, après vulcanisation, à des matériaux durcis, tels que des mastics ayant des propriétés satisfaisantes. La fluidité, ainsi que l'absence du phénomène de structuration, semble être la conséquence de la formation spécifique de groupements trialkoxysiloxy et/ou organo, bis alkoxysiloxy. Ces résultats, obtenus en présence d'un catalyseur très actif, n'étaient pas évidents au vu de l'art antérieur tel que précédemment exposé.

Ce résultat n'était pas non plus évident au vu de US—A—3,770,847 de Stauffer Chemical (priorité américaine du 30.12.1971) dans lequel on trouve décrites des compositions "bicomposants" réticulant en l'absence d'humidité et comprenant un organopolysiloxane à groupements hydroxysilylés, un agent réticulant à groupement alkoxysilylé et un catalyseur de condensation qui est une N,N dialcoyl (ou diaryl) hydroxylamine. Il est souligné dans ce document, d'une part, l'extrême difficulté d'obtenir une composition monocomposant satisfaisante et, d'autre part, la grande efficacité catalytique de l'hydroxylamine, celle-ci assurant très rapidement la condensation entre tous les groupements silanols du polysiloxane et tous les groupements alkoxysilylés de l'agent réticulant. On notera dans ce contexte, qu'en accord avec ce qui précède, l'agent réticulant qui est tri ou tétrafonctionnel est utilisé en quantité faible, la proportion pondérale entre le réticulant et l'organopolysiloxane étant comprise entre 0,5 et 10% et préférentiellement entre 1 et 6%. Dans les compositions, selon l'invention mise au point par la demanderesse, on utilise des quantités bien plus importantes d'agent réticulant (de l'ordre de 10 à 50% par rapport au composé à groupements hydroxysilylés mis en oeuvre). On devait donc s'attendre à obtenir, après mélange des réactifs, une composition du type gel totalement rétifiée. L'obtention d'une composition fluide est donc totalement inattendue au vu de US—A—3,770,847.

Les compositions selon l'invention sont essentiellement obtenues à partir d'alpha, oméga—dihydroxypolysiloxane d'agent réticulant à groupements alkoxysilylés utilisé en quantité relativement importante, d'hydroxylamine substituée et d'un accélérateur de prise. Il est, en outre, bien évident que les compositions peuvent contenir, en dehors des constituants principaux qui ont été définis, les divers additifs habituellement ajoutés à des compositions de ce type. Ceux-ci, qui pour certains d'entre eux seront précisés plus loin, peuvent être de nature très variée: charges, plastifiants, stabilisants, agents thixotropiques et diluants, est de préférence un α, ω dihydroxydiorganopolysiloxane de formule générale (I)

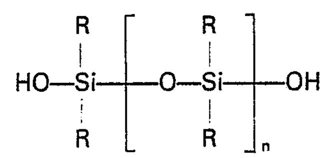

(I)

dans laquelle n représente un nombre entier, supérieur à 1 et où les symboles R identiques ou différents représentent des radicaux de nature hydrocarbonée non hydrolysable, ces radicaux pouvant être:

— un radical alcoyle ou halogénoalkyle ayant de 1 à 5 atomes de carbone et comportant de 1 à 6 atomes de chlore et/ou de fluor,
— des radicaux cycloalcoyles et halogénocycloalcoyles ayant de 3 à 8 atomes de carbone et contenant de 1 à 4 atomes de chlore et/ou de fluor,
— des radicaux aryles, alcoylaryles et halogénoaryles ayant de 6 à 8 atomes de carbone et contenant de 1 à 4 atomes de chlore et/ou de fluor,
— des radicaux cyanoalcoyles ayant de 3 à 4 atomes de carbone.

A titre illustratif on peut citer parmi les radicaux R: les groupes méthyle; éthyle; propyle; isopropyle; butyle; isobutyle; α-pentyle; t-butyle; chlorométhyle; dichlorométhyle; α-chloroéthyle; α,β-dichloroéthyle; fluorométhyle; difluorométhyle; α,β-difluoroéthyle; trifluoro-3,3,3 propyle; trifluoro cyclopropyle; trifluoro-4,4,4 butyle; heptafluoro-3,3,3,4,4,5,5 pentyle; β-cyanoéthyle; α-cyanopropyle: phényle; p-chlorophényle; m-chlorophényle; dichloro-3,5 phényle; trichlorophényle; tétrachlorophényle; o-, p-, ou m-tolyle; α,α,α-trifluorotolyle; xylyles comme diméthyl-2,3 phényle; diméthyl-3,4 phényle.

Préférentiellement les radicaux organiques R sont des radicaux méthyle, phényle, vinyle, ces radicaux pouvant être éventuellement halogénés ou bien encore des radicaux cyanoalkyle.

Les organopolysiloxanes de formule (I) ont, en général, une viscosité exprimée à 25°C et mesurée en milli pascal par seconde (mPa/s), comprise entre 50 et $10^7$ et préférentiellement, entre 100 et $10^6$. Il peut s'agir d'huiles ou de gommes dont on peut abaisser la viscosité par toute technique connue comme, par exemple, en additionnant une huile polysiloxanique courte dont les deux extrémités ont été bloquées par des groupements triorganosilylés.

Les agents à groupements polyalkoxysilylés également désignés sous l'expression agents rèticulants ou réticulants et utilisables dans le cadre de la présente invention sont les polyalkoxysilanes et les silicates.

Les agents réticulants peuvent être, en particulier, des composés monomères de formule (II), (III) ou (III')

$$R_xSi[OR']_{4-x} \qquad (II)$$

$$R_xSi[(OCH_2—CH_2)_aOR']_{4-x} \qquad (III)$$

dans lesquelles R a les significations préalablement données, où x représente un nombre entier égal à 1 ou 2, où a représente zéro ou un, et où R' représente un radical alcoyle ayant de 1 à 4 atomes de carbone pouvant contenir une liaison éther.

$$Si(OR')_4 \qquad (III')$$

A titre illustratif on citera parmi les agents réticulants alkoxylés les divers composés suivants:

le méthyltriméthoxysilane,
le méthyltriéthoxysilane,
le méthyltriisopropoxysilane,
le chlorométhyltriméthoxysilane,
le chlorométhyltriéthoxysilane,
le fluorométhyltriéthoxysilane,
le méthyltris-(β-méthoxyéthoxy)silane,
l'éthyltriméthoxysilane,
l'éthyltriéthoxysilane,
le n-propyltriméthoxysilane,
le n-propyltris-(β-méthoxyéthoxy)silane,
le pentafluoro-4,4,4,3,3 butyltriméthoxysilane,
l'hexyltriméthoxysilane,
l'éthyl-2 hexyltriméthoxysilane,
le vinyltriméthoxysilane,
le vinyltriéthoxysilane,
l'allyltriméthoxysilane,
le butène-2 yltriéthoxysilane,
le dichloro-2,2 cyclopropyltriéthoxysilane,
le difluoro-2,2 cyclopropyltriéthoxysilane,
le cyclopentyltriméthoxysilane,
le cyclohexyltriéthoxysilane,
le diméthyl-2,3 cyclohexyltriméthoxysilane,
le phényltriméthoxysilane,
le phényltris(β-méthoxyéthoxy)silane,
le trichlorophényltriméthoxysilane,
le tétrachlorophényltriéthoxysilane,
le (chlorométhyl)méthyldiméthoxysilane,
le (chloro-méthyl)méthyldiéthoxysilane,
le diméthyldiméthoxysilane,
le méthyl-n propyldiméthoxysilane,
le (dichloro-2,2 cyclopropyl)méthyldiméthoxysilane,
le (difluoro-2,2 cyclopropyl)méthyldiéthoxysilane,
le (dichloro-2,2 cyclopropyl)méthyldiéthoxysilane,
le (fluorométhyl)méthyldiéthoxysilane,
le (fluorométhyl)méthyldiméthoxysilane,
le silicate de méthyle,
le silicate d'éthyle,
le silicate de propyle,
le silicate d'isopropyle,
le silicate de butyle,
le silicate de β-méthoxyéthyle,
le silicate de β-éthoxyéthyle,
les silicates mixtes de méthyle et d'éthyle,
les silicates mixtes de méthyle et de butyle.

On utilisera de manière préférentielle les agents de réticulation précédemment décrits et dont les groupements R ont les significations préférentielles définies ci-avant. Enfin, à titre avantageux, on emploiera des agents de réticulation dont les groupements R sont des groupements méthyle, éthyle ou phényle.

Les hydroxylamines substituées qui sont ajoutées dans la composition à titre d'agent de condensation ont pour formule générale (IV)

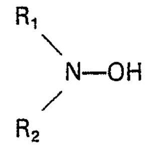

(IV)

dans laquelle le radical $R_1$, représente un radical monovalent hydrocarboné aliphatique ou cycloaliphatique saturé ou insaturé, aryle, alkylaryle ou arylalkyle. Le radical $R_2$ a la même signification que le radical $R_1$ et peut en outre représenter un atome d'hydrogène. En règle générale, les radicaux $R_1$ et $R_2$ ont en général au plus 10 atomes de carbone. Eventuellement, les deux radicaux $R_1$ et $R_2$ peuvent constituer ensemble un radical divalent saturé ou insaturé comprenant éventuellement un hétéroatome et comportant de 2 à 6 atomes. On notera qu'il s'agit, dans cette situation, d'hétérocycles saturés ou insaturés que l'on désignera par l'expression "hydroxylamine cyclique substituée". Ces hétérocycliques peuvent comporter un autre atome d'azote, ou un atome d'oxygène ou un atome de silicium.

Préférentiellement, les radicaux $R_1$ et $R_2$ représentent un groupement alkyle ayant, au plus, 4 atomes de carbone ou un radical phényle. Avantageusement, on utilise des hydroxylamines substituées ayant des groupements $R_1$, $R_2$ identiques.

A titre illustratif, on peut citer parmi les diverses hydroxylamines acycliques utilisables:

— la N-diméthylhydroxylamine
— la N-diéthylhydroxylamine
— la N-dibutylhydroxylamine
— la N-méthyl N-phénylhydroxylamine
— la N-diphénylhydroxylamine

Parmi les "hydroxylamines cycliques substituées", on citera la N-hydroxymorpholine, la N-hydroxypipéridine, la N-hydroxypyrrolidine.

L'hydroxylamine substituée est employée en quantité catalytique, telle qu'elle représente, pondéralement, de 0,01 à 10% de la masse globale constituée par le composé à groupement hydroxysilylé et le réticulant; préférentiellement, le catalyseur représente de 0,1 à 2% de cette masse globale.

On ajoute durant la réaction de condensation entre le composé organosilicique à groupements hydroxysilylés et le composé à groupements polyalcoxysilylés, un autre agent de condensation connu. Un tel procédé constitue l'objet de la présente invention.

Selon la caractéristique de l'invention, l'agent réticulant à groupement polyalkoxysilylé est utilisé, comme on l'a déjà dit, en quantité telle qu'il y ait de 1 à 5 groupements polyalkoxysilylés par groupement silanol. Avantageusement, on met en oeuvre de 1,05 à 2 groupements polyalkoxysilylés par groupement silanol.

Les compositions, selon l'invention, peuvent en outre contenir tous les ingrédients divers, utilisables dans l'art chimique considéré. Si l'on désire obtenir des élastomères ou des revêtements, il faudra introduire des charges qui permettront de renforcer les diverses propriétés mécaniques. Les charges peuvent être minérales ou bien organiques.

Les charges minérales sont, de manière courante, des silices de combustion ou des silices de précipitation dont les caractéristiques physicochimiques sont fonction de l'utilisation envisagée. Les diverses silices peuvent avoir subi un traitement de modification de leurs propriétés de surface, en les rendant en particulier hydrophobes; la nature des divers agents destinés à modifier les propriétés de surface n'est pas critique. Les agents utilisés sont généralement de nature organosilicique tels que les silazanes (hexaméthyldisilazane), les alcoylsilanes (triméthylsilane), les alcoylalkoxysilanes (triméthyléthoxysilane), les alcoylchlorosilanes, les alcénylchlorosilanes, les organopolysiloxanes α,ω dihydroxylés, les cyclosiloxanes et sont par exemple décrits dans FR—A—2,356,596 et 2,395,952.

En outre, en plus de la silice éventuellement traitée, les compositions peuvent contenir d'autres charges, telles que du quartz pulvérisé, de la terre de diatomée, du talc et du noir de carbone.

Parmi les charges organiques utilisables, on citera la poudre de liège, la sciure de bois et les fibres synthétiques.

La quantité globale de charge est évidemment fonction de l'application envisagée. C'est ainsi que pour les compositions utilisées pour la préparation de mastics et de revêtements, on incorpore, en général, de 5 à 50% et de préférence de 10 à 40% de silice de combustion ou de précipitation éventuellement traitée.

Les compositions, selon l'invention, peuvent être utilisées dans d'autres applications. Elles permettent également d'obtenir des produits de recouvrement tels que les vernis et les peintures. Elles contiendront

alors des pigments et éventuellement d'autres additifs tels que des agents antistructures, des stabilisants thermiques, des agents thixotropiques et des inhibiteurs de corrosion.

Les agents antistructures connus également sous la dénomination de plastifiants sont, en général, de nature organosilicique et sont introduits, à raison de 0 à 20 parties pour 100 parties de composition organosilicique. Ils permettent d'éviter le durcissement des compositions lors du stockage. Parmi les agents antistructures, on peut citer les silanes à groupements hydrolysables, ou des huiles diorganopolysiloxaniques hydroxylées ou alkoxylées, de faible poids moléculaire. De telles compositions sont par exemple décrites dans FR—A—1,111,969.

Parmi les stabilisants thermiques qui sont bien connus de l'homme de l'art, on peut citer les sels, les oxydes et les hydroxydes de fer, de cérium ou de manganèse. Ces additifs qui peuvent être utilisés seuls ou en mélange sont, en général, introduits à raison de 0,01 à 5% par rapport au poids de la gomme organopolysiloxaniques mise en oeuvre.

Les compositions organosiliciques (qui constituent un objet de la présente invention), sont préparées en mélangeant les divers ingrédients de la composition tels que précédemment définis. Préférentiellement, on introduit dans le composé à groupements hydroxysilylés les divers composants, hormis l'agent réticulant, et le catalyseur effectue éventuellement sur le mélange un traitement de déshydratation par chauffage, sous pression réduite, à une température en général supérieure à 100°. Après refroidissement, on ajoute sous atmosphère anhydre l'agent réticulant et le catalyseur, puis maintient les réactifs à une température, en général comprise entre 10° et 150°C, et de préférence entre 20° et 100°C, de manière à achever la condensation entre le polysiloxane et l'agent réticulant. La condensation est habituellement achevée sur une période de temps allant de quelques minutes à plusieurs heures.

La composition obtenue est ensuite refroidie. Celle-ci peut être immédiatement stockée avant son utilisation ultérieure. Selon une variante préférentielle, on effectue sur cette composition un traitement de dévolatilisation habituellement réalisé sous pression réduite et à une température modérée. Ce traitement de dévolatilisation permet d'éliminer le catalyseur: on obtient ainsi une composition dont la stabilité au stockage est particulièrement longue.

On ajoute en outre dans les compositions dévolatilisées ou non, un accélérateur de prise choisi parmi les dérivés d'étain et/ou les dérivés du titane et en particulier, ceux qui minimisent les réactions de dégradation (chélates). De telles compositions, qui sont stables au stockage, constituent l'objet de la présente invention. Bien entendu, à ce stade, on peut ajouter divers ingrédients supplémentaires dont en particulier des primaires qui permettent d'obtenir des formules variées et en particulier autoadhérantes sur divers matériaux tels que bois, métaux et béton.

L'utilisation des compositions, selon l'invention, pour l'obtention de matériaux durcis, constitue comme on l'a déjà dit, un autre objet de la présente invention. La vulcanisation s'effectue en présence d'humidité dès la température ambiante. Une simple exposition en atmosphère humide permet d'obtenir rapidement la vulcanisation.

Exemple No. 1 (comparatif)

Dans un mélange de 20 g d'un α,ω-dihydroxypolydiméthylsiloxane à 3,8% d'OH soit ~11,7 motifs diméthylsiloxane et de 9,5 g de vinyltriméthoxysilane, on ajoute 0,05 g de diéthylhydroxylamine et laisse 20 min à 60°C. On met alors sous vide pour éliminer la diéthylhydroxylamine et le vinyltriméthoxysilane en excès. Le produit dévolatisé ne contient plus de silanols.

Par analyse RMN, on montre que l'huile obtenue a la structure suivante:

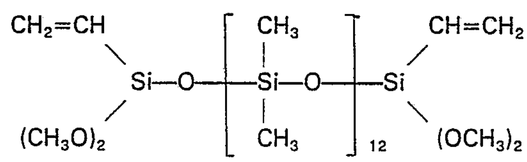

Exemple No. 2 (comparatif)

L'essai de l'exemple No. 1 a été repris en remplaçant le vinyltriméthoxysilane par des quantités molaires équivalentes des différents alkoxysilanes suivants:

— $Si(OCH_3)_4$
— $CH_3Si(OCH_3)_3$
— $Si(OC_2H_5)_4$
— $CH_3Si(OCH_2CH_2OCH_3)_3$
— $CH_2=CH—Si(OCH_2CH_2OCH_3)_3$

Les réactions sont toutes complètes après 1 heure à 60°C.

Exemple No. 3

On prépare dans un malaxeur la composition pondérale suivante:

| | |
|---|---|
| α,ω-dihydroxypolydiméthylsiloxane de viscosité 60 000 mPas | 80 g |
| α,ω-triméthylsiloxypolydiméthylsiloxane de viscosité 50 mPas | 30 g |
| Diphénylsilanediol | 3 g |
| Silice de combustion de 150 $m_2/g$ | 12 g |
| Carbonate de calcium de diamètre particulaire moyen 4 micromètres | 50 g |

La température est porté à 120°C sous vide de 2666,4 Pa (20 mm de mercure) dans le but d'éliminer les traces d'eau de la composition. On ramène la température à 60°C et ajoute:

| | |
|---|---|
| $CH_2{=}CH{-}Si(OCH_2CH_2OCH_3)_3$ | : 12 g |
| $(C_2H_5)_2NOH$ | : 0,1 g |

On laisse 30 min à 60°C, dévolatilise 30 min à 60°C sous 2666,4 Pa (20 mm de mercure) puis ajoute 0,1 g de dilaurate de dibutylétain et refroidit.

On obtient une composition stable en tube fermé, s'extrudant facilement et formant par mise à l'air humide un élastomère.

Non collant en surface: 1 h 30—2 h

Film de 1,5 mm d'épaisseur démoulable après 12 heures et ayant après 10 jours les propriétés suivantes:

| | |
|---|---|
| Dureté Shore A | : 20 |
| Résistance à la rupture | : 1,9 mPa |
| Allongement à la rupture | : 735% |

Un essai comparatif a été effectué dans les mêmes conditions, mais sans addition de diéthylhydroxylamine. Il conduit à une composition qui ne réticule pas lorsqu'on la met à l'air humide.

Exemple No. 4

Même essai que dans l'exemple No. 3, mais on introduit en une seule fois le mélange:

| | |
|---|---|
| $CH_2{=}CH{-}Si(OCH_2CH_2OCH_3)_3$ | : 12 g |
| $(C_2H_5)_2N{-}OH$ | : 0,2 g |
| Dilaurate de dibutylétain | : 0,1 g |

et laisse 20 min à 60°C puis refroidit.

La composition obtenue est stable en tube fermé, s'extrude facilement et réticule par mise à l'air humide.

Non collant en surface: ~1 heure

Film de 1,5 mm d'épaisseur démoulable en 10 heures.

| | |
|---|---|
| Dureté Shore A | : 20 |
| Résistance à la rupture | : 1,7 mPa |
| Allongement à la surface | : 450% |

Exemple No. 5

Même essai que dans l'exemple 1, mais on coule le mélange:

| | |
|---|---|
| $CH_3Si(OCH_2CH_2OCH_3)_3$ | : 11 g |
| $(C_2H_5)_2NOH$ | : 0,1 g |

puis laisse 3 heures à 60°C et dévolatilise pendant 30 mn sous une pression résiduelle de 2666,4 Pa (20 mm de mercure). On ajoute alors:

| | |
|---|---|
| $H_2NCH_2CH_2NH{-}CH_2CH_2CH_2Si(OCH_3)_3$ | : 2 g |
| Dilaurate de dibutylétain | : 0,1 g |

et laisse refroidir. La composition obtenue est stable en tube fermé, s'extrude facilement et réticule par mise à l'air humide.

Non collant en surface: 2 heures

Film de 1,5 mm d'épaisseur démoulable en 24 heures et présentant après 28 jours les propriétés suivantes:

| | | |
|---|---|---|
| Dureté Shore A | : | 15 |
| Résistance à la rupture | : | 1,2 mPa |
| Allongement à la rupture | : | 700% |

Les collages effectués sur verre, aluminium, béton conduisent tous à des ruptures cohésives.

Exemple No. 6

On prépare dans une malaxeur la composition pondérale suivante:

| | |
|---|---|
| α,ω-dihydroxypolydiméthylsiloxane de viscosité 20 000 mPas | 100 g |
| Résine organosilicique constituée de motifs $(CH_3)_3SiO_{0,5}$ et $SiO_2$ et ayant 2% de groupements hydroxyles | 3 g |
| Huile α,ω-dihydroxypolyméthylphénylsiloxane ayant 6% de groupements hydroxyles | 2 g |
| Silice de combustion de 300 $m^2$/g traité par l'octaméthylcyclotétrasiloxane | 15 g |

On chauffe à 80°C sous vide pour éliminer les traces d'eau de la composition, puis on ajoute:

$Si(OC_2H_5)_4$ : 7,5 g
$(C_2H_5)_2NOH$ : 0,15 g

On laisse 2 h à 80°C, dévolatilise 30 min à 80°C sous pression résiduelle de 2666,4 Pa (20 mm de mercure) et ajoute:

$Si(OC_2H_5)_4$ : 2 g
$Ti(OC_2H_5)_4$ : 1 g

puis laisse refroidir.

La composition est stable en tube fermé et réticule par mise à l'air humide.

Non collant en surface: 2 heures

Film de 1,5 mm d'épaisseur démoulable en 24 heures, ayant après jours les propriétés suivantes:

| | | |
|---|---|---|
| Dureté Shore A | : | 18 |
| Résistance à la rupture | : | 2 mPa |
| Allongement à la rupture | : | 245% |

**Revendications**

1. Procédé d'obtention de compositions organosiliciques transformables en matériaux durcis par exposition à l'humidité et en présence d'hydroxylamine substituée, utilisée en temps que catalyseur, caractérisé en ce que, en vue d'obtenir des compositions mono-composantes stables au stockage, on fait réagir:

1) au moins un alpha, oméga-dihydroxypolysiloxane

2) au moins un agent réticulant monomère à groupements polyalkoxysilylés choisi parmi le groupe consistant en:

a) les polyalkoxysilanes de formules:

$$R_xSi(OR')_{4-x} \quad (II)$$

$$R_xSi[(OCH_2—CH_2)_aOR']_{4-x} \quad (III)$$

dans lesquelles les radicaux R identiques ou différents représentent des radicaux hydrocarbonés non hydrolysables, X représente un nombre entier égal à 1 ou 2, a représente 0 ou 1 et R' représente un radical alkyle ayant de 1 à 4 atomes de carbone,

b) les silicates de formule:

$$Si(OR')_4 \quad (III')$$

dans laquelle R' a la même signification que ci-dessus,

3) de 0,1 à 2% en poids par rapport au poids total de la composition d'hydroxylamine substitués comme catalyseur de réticulation, ledit réticulant (2) étant en quantité telle qu'il y ait, par groupement silanol de 1 à 5 groupements polyalkoxylés,

4) un accélérateur de prise choisi parmi les dérivés de l'étain et/ou les dérivés du titane.

2. Procédé selon la revendication 1, dans lequel le polysiloxane 1 à groupements hydroxysilylés est un alpha, oméga-dihydroxypolysiloxane de formule (1):

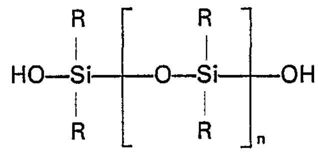

(I)

dans laquelle n représente un nombre entier supérieur à 1 et où les symboles R identiques ou différents représentent:

— un radical alcoyle ou halogénoalkyle ayant de 1 à 5 atomes de carbone et comportant de 1 à 6 atomes de chlore et/ou de fluor,
— des radicaux cycloalcoyles et halogénocycloalcoyles ayant de 3 à 8 atomes de carbone et contenant de 1 à 4 atomes de chlore et/ou de fluor,
— des radicaux aryles, alcoylaryles et halogénoaryles ayant de 6 à 8 atomes de carbone et contenant de 1 à 4 atomes de chlore et/ou de fluor,
— des radicaux cyanoalcoyles ayant de 3 à 4 atomes de carbone.

3. Procédé selon l'une des revendications précédentes dans lequel l'hydroxylamine substitué a pour formule:

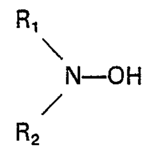

dans laquelle le radical $R_1$ représente un radical monovalent, hydrocarboné, aliphatique ou cycloaliphatique, saturé ou insaturé, aryle, alkylaryle ou arylalkyle; le radical $R_2$ ayant la même signification que le radical $R_1$ et pouvant, en outre, représenter un atome d'hydrogène, les deux radicaux $R_1$ et $R_2$ pouvant ensemble constituer un radical divalent, comprenant éventuellement un hétéroatome et comportant de 2 à 6 atomes.

4. Procédé selon la revendication 3 dans lequel les radicaux $R_1$ et $R_2$ représentent un groupement alkyle ayant au plus 4 atomes de carbone ou un radical phényle.

5. Procédé selon l'une des revendications 1 à 4 dans lequel on utilise l'agent réticulant en quantité telle, qu'il y ait par groupement silanol de 1,05 à 2 groupements polyalkoxysilylé.

6. Procédé selon l'une des revendications 1 à 5 selon lequel on fait subir à la composition, après condensation, un traitement de dévolatilisation.

7. Compositions organosiliciques obtenues selon l'une des revendications 1 à 6.

8. Utilisation des compositions selon la revendication 7 pour l'obtention de matériaux durcis par exposition des dites compositions à l'humidité.

**Patentansprüche**

1. Verfahren zur Erzielung von Organosiliciumzusammensetzungen, die in Materialien überführbar sind, welche durch Aussetzen an Feuchtigkeit und in Gegenwart von substituiertem Hydroxylamin, das gleichzeitig als Katalysator verwendet wird, gehärtet werden, dadurch gekennzeichnet, daß man, um lagerbeständige Einkomponenten-Zusammensetzungen zu erhalten, reagieren läßt:

1) Wenigstens ein Alpha, Omega-Dihydroxysiloxan,

2) wenigstens ein monomeres Vernetzungsmittel mit Polyalkoxysilylgruppierungen, ausgewählt unter der Gruppe bestehend aus:

a) den Polyalkoxysilanen der Formeln

$$R_xSi(OR')_{4-x} \quad (II)$$

$$R_xSi[(OCH_2—CH_2)_aOR']_{4-x} \quad (III)$$

worin die Reste R, die identisch oder verschieden sind, nicht hydrolysierbare Kohlenwasserstoffreste bedeuten, X eine ganze Zahl gleich 1 oder 2 bedeutet, a 0 oder 1 bedeutet und R' einen Alkylrest mit 1 bis 4 Kohlenstoffatomen darstellt,

b) den Silicaten der Formel

$$Si(OR')_4 \quad (III')$$

worin R' dieselbe Bedeutung wie vorstehend hat,

3) von 0,1 bis 2 Gew.-% in Bezug auf das Gesamtgewicht der Zusammensetzung, substituiertes

Hydroxylamin als Vernetzungskatalysator, wobei der Vernetzer (2) in solcher Menge vohanden ist, daß man je Silanolgruppierung von 1 bis 5 polyalkoxylierte Gruppierungen hat,

4) einen Härtungsbeschleuniger, ausgewählt unter den Derivaten des Zinns und/oder den Derivaten des Titans.

2. Verfahren gemäß Anspruch 1, wobei das Polysiloxan 1 mit hydroxysilylierten Gruppierungen ein Alpha, Omega-Dihydroxypolysiloxane der Formel (I)

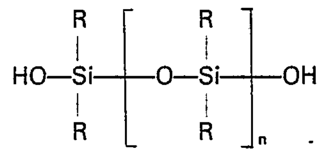

ist,
worin n eine ganze Zahl größer als 1 ist, und worin die Symbole R, die identisch oder verschieden sind, bedeuten:

— einen Alkl- oder Halogenalkylrest mit 1 bis 5 Kohlenstoffatomen und mit 1 bis 6 Chlor- und/oder Fluoratomen,
— Cycloalkyl- und Halogencycloalkylreste mit 3 bis 8 Kohlenstoffatomen und enthaltend 1 bis 4 Chlor- und/oder Fluoratome,
— Aryl-, Alkylaryl- und Halogenarylreste mit 6 bis 8 Kohlenstoffatomen und enthaltend 1 bis 4 Chlor- und/oder Fluoratome,
— Cyanoalkylreste mit 3 bis 4 Kohlenstoffatomen.

3. Verfahren gemäß einem der vorhergehenden Ansprüche, worin das substituierte Hydroxylamin die Formel:

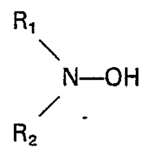

besitzt, worin der Rest $R_1$ einen aliphatischen oder cycloaliphatischen, gesättigten oder ungesättigten einwertigen Kohlenwasserstoffrest, Aryl, Alkylaryl oder Arylalkyl darstellt, der Rest $R_2$ dieselbe Bedeutung wie der Rest $R_1$ hat und außerdem ein Wasserstoffatom bedeuten kann, wobei die beiden Reste $R_1$ und $R_2$ zusammen einen zweiwertigen Rest bilden können, der gegebenenfalls ein Heteroatom enthält und 2 bis 6 Atome umfaßt.

4. Verfahren gemäß Anspruch 3, worin die Reste $R_1$ und $R_2$ eine Alkylgruppe mit höchstens 4 Kohlenstoffatomen oder einen Phenylrest darstellen.

5. Verfahren gemäß einem der Ansprüche 1 bis 4, dadurch gekennzeichnet, daß man das Vernetzungsmittel in solcher Menge verwendet, daß pro Silanolgruppierung von 1,05 bis 2 polyalkoxysilylierte Gruppierungen vorhanden sind.

6. Verfahren gemäß einem der Ansprüche 1 bis 5, dadurch gekennzeichnet, daß man die Zusammensetzung nach dem Kondensieren einer Behandlung zur Entfernung flüchtiger Bestandteile unterwirft.

7. Organosiliciumzusammensetzungen, erhalten gemäß einem der Ansprüche 1 bis 6.

8. Verwendung der Zusammensetzungen gemäß Anspruch 7 zur Erzielung von Materialien, die durch Aussetzen dieser Zusammensetzungen an Feuchtigkeit gehärtet sind.

**Claims**

1. Process for preparing organosilicon compositions capable of being converted into materials which are set on being exposed to moisture and in the presence of substituted hydroxylamine, which is used as catalyst, characterized in that, in order to prepare single-component compositions which are stable in storage, the following are reacted:

1) at least one alpha,omega-dihydroxypolysiloxane,

2) at least one monomeric crosslinking agent containing polyalkoxysilylated groups which is chosen from the class consisting of:

a) the polyalkoxysilanes of formulae:

$$R_xSi(OR')_{4-x} \quad (II)$$

$$R_xSi[(OCH_2{-}CH_2)_aOR']_{4-x} \quad (III)$$

in which the radicals R, which are identical or different, denote nonhydrolysable hydrocarbon radicals, X denotes an integer equal to 1 or 2, a denotes 0 or 1 and R′ denotes an alkyl radical containing from 1 to 4 carbon atoms,

b) the silicates of formula:

$$Si(OR')_4 \qquad (III')$$

in which R′ has the same meaning as above,

3) from 0.1 to 2% by weight, based on the total weight of the composition, of a substituted hydroxylamine as a crosslinking catalyst, the said crosslinking agent (2) being in such quantity that there are from 1 to 5 polyalkoxylated groups per silanol group,

4) a setting accelerator chosen from tin derivatives and/or titanium derivatives.

2. Process according to Claim 1, in which the polysiloxane 1 containing hydroxysilylated groups is an alpha,omega-dihydroxypolysiloxane of formula (1):

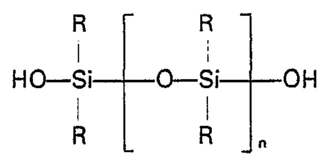

(I)

in which n denotes an integer greater than 1 and where the symbols R, which are identical or different, denote:

— an alkyl or haloalkyl radical containing from 1 to 5 carbon atoms and containing from 1 to 6 chlorine and/or fluorine atoms,

— cycloalkyl and halocycloalkyl radicals containing from 3 to 8 carbon atoms and containing from 1 to 4 chlorine and/or fluorine atoms,

— aryl, alkylaryl and haloaryl radicals containing from 6 to 8 carbon atoms and containing from 1 to 4 chlorine and/or fluorine atoms, and

— cyanoalkyl radicals containing from 3 to 4 carbon atoms.

3. Process according to either of the preceding claims in which the substituted hydroxylamine has the formula:

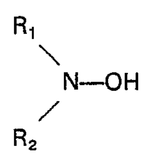

in which the radical $R_1$ denotes a monovalent, saturated or unsaturated, aliphatic or alicyclic, aryl, alkylaryl or arylalkyl hydrocarbon radical; the radical $R_2$ having the same meaning as the radical $R_1$ and being capable, furthermore, of denoting a hydrogen atom, both radicals $R_1$ and $R_2$ being capable of together forming a divalent radical, incorporating a heteroatom if desired and containing from 2 to 6 atoms.

4. Process according to Claim 3, in which the radicals $R_1$ and $R_2$ denote an alkyl group containing at most 4 carbon atoms or a phenyl radical.

5. Process according to one of Claims 1 to 4, in which the crosslinking agent is used in such quantity that there are from 1.05 to 2 polyalkoxysilylated groups per silanol group.

6. Process according to one of Claims 1 to 5, according to which, after condensation, the composition is subjected to a devolatilization treatment.

7. Organosilicon compositions obtained according to one of Claims 1 to 6.

8. Use of the compositions according to Claim 7 for preparing materials which are set by exposing the said compositions to moisture.